# EUROPÄISCHE PATENTSCHRIFT

(11) **EP 4 445 988 B1**
(45) Veröffentlichungstag und Bekanntmachung des Hinweises auf die Patenterteilung: **05.08.2026**
(21) Anmeldenummer: 23167331.0
(22) Anmeldetag: 11.04.2023
(51) Int. Cl.: B01D 53/22

(54) **VERFAHREN ZUR ZUDOSIERUNG EINES SEKUNDÄRGASES**
METHOD FOR DOSING A SECONDARY GAS
PROCÉDÉ DE DOSAGE D'UN GAZ SECONDAIRE

(43) Veröffentlichungstag der Anmeldung: 16.10.2024
(73) Patentinhaber: Axiom Angewandte Prozeßtechnik Ges. m.b.H., 2483 Ebreichsdorf (AT)
(72) Erfinder: SZIVACZ, Johannes, Ebreichsdorf (AT); WINTERSPERGER, Johannes, Ebreichsdorf (AT)
(74) Vertreter: SONN Patentanwälte GmbH & Co KG

(56) Entgegenhaltungen:
- WO-A1-2023/191794
- US-A1- 2010 122 627
- US-A1- 2010 322 845
- US-A1- 2012 195 824

## Beschreibung

Das Gebiet der vorliegenden Erfindung ist das der Verfahren zur Zudosierung eines Sekundärgases, nämlich Wasserstoff, aus einem Niederdrucknetz in ein Hochdrucknetz mit Primärgas, nämlich dem Erdgasnetz.

Die Energiewende stellt eine der zentralen Herausforderungen unserer Zeit dar und ist von entscheidender Bedeutung, um den globalen Klimawandel einzudämmen und langfristig eine nachhaltige und umweltfreundliche Energieversorgung sicherzustellen. Angesichts der drängenden Notwendigkeit, den Ausstoß von Treibhausgasen zu reduzieren und fossile Brennstoffe durch erneuerbare Energien zu ersetzen, spielt Wasserstoff eine immer wichtigere Rolle als Energieträger im Rahmen der Entwicklung einer grünen und klimaneutralen Wirtschaft.

Wasserstoff besitzt großes Potenzial, insbesondere in Sektoren, in denen die direkte Elektrifizierung schwierig oder ineffizient ist, wie etwa im Verkehr oder bei der Wärmeversorgung. Die Integration von Wasserstoff in bestehende Energiesysteme und Infrastrukturen stellt jedoch eine große technische Herausforderung dar, die innovative Lösungen erfordert.

Die US 2010/0122627 A1 betrifft membranbasierte Systeme und Verfahren für die Wasserstoffabtrennung, insbesondere aus Synthesegas ("Syngas"). Konkrete Partialdrücke, Druckverhältnisse oder die Selektivität der Membran werden in dem Dokument nicht angeführt.

Die US 2012/0195824 A1 betrifft ein Verfahren zur Herstellung eines Gasgemisches, in dem Wasserstoff verdünnt vorliegt.

Eine Möglichkeit, Wasserstoff (und andere Gase) in großem Maßstab zu nutzen und zu verteilen, besteht darin, ihn in das bestehende Erdgasnetz einzuspeisen und somit die bereits vorhandene Energieinfrastruktur effizient zu nutzen.

Diesem Grundgedanken folgend offenbart die US 2010/0322845 A1 ein Verfahren zur Rückgewinnung von Wasserstoff aus dem Erdgasnetz auf der Grundlage von Druckwechsel-Adsorption.

Weiters betrifft die EP 2 979 743 B1 eine Vorrichtung und ein Verfahren zur Speicherung und Verteilung von erneuerbarer Energie. Dabei wird Erdgas mit mittels der erneuerbaren Energie hergestelltem Wasserstoff versetzt, das so erhaltene Erdgas/Wasserstoffgemisch über ein vorzugsweises bereits bestehendes Gasnetz, vorzugsweise ein Erdgasnetz, verteilt und der Wasserstoff an einem gewünschten Ort mittels Membrantrennung wieder aus dem Erdgas/Wasserstoffgemisch abgetrennt. Dieses Verfahren ist dadurch gekennzeichnet, dass Erdgas in einem geeigneten Speicher mit mittels der erneuerbaren Energie hergestelltem Wasserstoff vermischt und gelagert wird, wobei im Fall der Entnahme von Erdgas und/oder Wasserstoff das gelagerte Gasgemisch mittels einer Membrantrennung in Erdgas mit einem Wasserstoffgehalt entsprechend den gesetzlichen Vorschriften zum Einspeisen in das Erdgasnetz einerseits und einem Erdgas/Wasserstoffgemisch mit einem Wasserstoffgehalt von etwa 50 % zur Rückführung in den Speicher andererseits aufgetrennt wird.

Es sind jedoch weitere technische Entwicklungen nötig, um Wasserstoff (und andere Gase) aus lokalen Niederdrucknetzen (beispielsweise nach der Erzeugung in einer mit Strom aus erneuerbaren Energien betriebenen Elektrolysevorrichtung) möglichst energieeffizient bzw. mit technisch möglichst geringem Aufwand in Hochdrucknetze wie das Erdgasnetz einzuspeisen. Eines der Hauptprobleme besteht darin, den Wasserstoff (oder andere Gase) aus dem Niederdrucknetz, in dem er üblicherweise erzeugt wird, auf den erforderlichen höheren Druck des Hochdrucknetzes zu bringen. Zwar kann Wasserstoff mittlerweile mittels Hochdruckelektrolyse erzeugt werden, allerdings ist dieses Verfahren komplex und teuer. Somit erfordert die Einspeisung von Wasserstoff in das Hochdrucknetz üblicherweise den Einsatz von Kompressoren, die zusätzliche Energie verbrauchen und die Effizienz des Gesamtprozesses beeinträchtigen können.

Daher ist es unter anderem Aufgabe der vorliegenden Erfindung, ein Verfahren bereitzustellen, das die Einspeisung von Wasserstoff (und anderen Gasen) in Hochdrucknetze vereinfacht bzw. energieeffizienter gestaltet.

Die vorliegende Erfindung betrifft ein Verfahren zur Zudosierung eines Sekundärgases, nämlich Wasserstoff, aus einem Niederdrucknetz in ein Hochdrucknetz mit Primärgas, nämlich Methan, über eine Membraneinheit zur Gaspermeation, wobei das Primärgas, als Teil eines ersten Gasgemisches, auf der Feedseite unter Druck P_{f} in die Membraneinheit strömt und das Sekundärgas, gegebenenfalls als Teil eines zweiten Gasgemisches, auf der Sweepseite unter Druck Pₛ in die Membraneinheit strömt (vorzugsweise im Gegenstrom, da dies die Effizienz erhöht), wobei die Membraneinheit eine Polymermembran, eine Metallmembran, eine Zeolithmembran, eine Keramikmembran oder eine Membran mit gemischter Matrix aufweist, wobei die Membran mit gemischter Matrix eine Polymer- oder Keramikmatrix mit anorganischen Füllstoffen wie Zeolithen, Metal-Organic-Frameworks (MOFs) oder Kohlenstoffnanoröhren kombiniert. Der Druck P_{f} ist höher als der Druck Pₛ (wobei P_{f} und Pₛ jeweils Gesamtdrücke sind). Der Partialdruck des Sekundärgases auf der Sweepseite ist höher als der Partialdruck des Sekundärgases auf der Feedseite. Die Selektivität der Membraneinheit für das Sekundärgas gegenüber dem Primärgas beträgt zumindest 50. Durch die Triebkraft der Partialdruckdifferenz reichert sich das Sekundärgas aus dem Niederdrucknetz auf der Feedseite (also im Hochdruckbereich) an. Hierin wird unter "Partialdruck" derjenige Druck verstanden, den ein spezifisches Gas in einem System ausübt, unabhängig davon, ob das Gas in einem Gasgemisch oder als reines Gas vorliegt. Im Falle eines Gasgemischs entspricht der Partialdruck dem hypothetischen Druck, den das betrachtete Gas ausüben würde, wenn es allein den gesamten verfügbaren Raum des Systems einnehmen würde (dies entspricht der gebräuchlicheren Verwendung des Begriffs "Partialdruck"). Im Falle eines reinen Gases entspricht der Partialdruck dem Gesamtdruck des Systems (da keine anderen Gase vorhanden sind, die zum Druck beitragen). Wenn also das Sekundärgas in reiner Form (und nicht als Teil des zweiten Gasgemisches) auf der Sweepseite in die Membraneinheit strömt (als "Sweep"), entspricht der Partialdruck des Sekundärgases dem Gesamtdruck Pₛ (und der Partialdruck des Primärgases im Sweep ist 0, da keines vorhanden ist).

Das Sekundärgas hat im Niederdrucknetz einen höheren Anteil am Gasgemisch (also einen höheren Partialdruck), bzw. kann es in reiner Form (also mit einem "Anteil" von 100%; dann entspricht der Partialdruck dem Gesamtdruck) vorliegen, als dessen Anteil (Partialdruck) im Hochdrucknetz (in dem z.B. eine Zielkonzentration von 10% im Gasgemisch angestrebt wird).

Erfindungsgemäß reichert sich das Sekundärgas aus dem Niederdrucknetz auf der Feedseite (also im Hochdruckbereich) an (aufgrund der Partialdruckdifferenz). Mit anderen Worten bedingt die erfindungsgemäße Zudosierung, dass der Sekundärgasanteil im feedseitig aus der Membraneinheit strömenden Gasgemisch (sozusagen dem "Retentat") höher ist als der Sekundärgasanteil im feedseitig in die Membraneinheit strömenden Gasgemisch (bzw., wenn der ursprüngliche Sekundärgasanteil 0% beträgt und keine weiteren Gase neben dem Primärgas vorhanden sind, im feedseitig in die Membraneinheit strömenden Gas), d.h. dem "Feed". Das sweepseitig vorliegende Sekundärgas wird durch die Triebkraft der Membran (aufgrund der Partialdruckdifferenz) sozusagen auf der Feedseite "hochverdichtet". Dies reduziert den Aufwand bzw. den Energiebedarf für die Zudosierung des Sekundärgases ins Hochdrucknetz (vor allem im Vergleich zur Zudosierung rein über Kompression). Dies ist insbesondere bei Wasserstoff-Anwendungen, die - im Sinne der Energiewende - möglichst klimafreundlich sein sollen, relevant.

Das Hochdrucknetz ist ein (bereits bestehendes) Erdgasnetz und das Niederdrucknetz ist ein lokales Gasnetz, an das zumindest eine Vorrichtung zur Herstellung von Wasserstoff (die bevorzugt mit erneuerbarer Energie betrieben wird) und/oder ein Wasserstoffspeicher angeschlossen ist. Beispielsweise kann Wasserstoff mittels Elektrolyse oder Dampfreformierung hergestellt werden.

Die Vorrichtung zur Herstellung von Wasserstoff ist bevorzugt eine Elektrolysevorrichtung. Diese Elektrolysevorrichtung wird vorzugsweise mit Strom betrieben, der von einer Photovoltaikanlage oder einem Windrad erzeugt wird.

Das Hochdrucknetz weist üblicherweise einen Druck im Bereich von 20 bis 100 bar (oder höher) auf. Das Hochdrucknetz ist vorzugsweise ein bereits bestehendes Erdgasnetz. Insbesondere ist das Hochdrucknetz für den Transport und die Verteilung von Erdgas ausgelegt. Das Hochdrucknetz kann sowohl überregionale als auch regionale Erdgasleitungen und Verteilernetze umfassen.

Das Niederdrucknetz weist üblicherweise einen Druck im Bereich von etwa 0,1 bis 15 bar auf. Das Niederdrucknetz kann ein lokales Gasnetz sein, das für den Transport und die Verteilung von Wasserstoff und ggf. anderen Gasen in geringerem Umfang ausgelegt ist. Ein Wasserstoffspeicher kann an das Niederdrucknetz angeschlossen sein, um den lokal erzeugten Wasserstoff zwischenzuspeichern und die Flexibilität und Verfügbarkeit von Wasserstoff für die Einspeisung in das Hochdrucknetz zu erhöhen. Das Niederdrucknetz kann auch an andere Wasserstoffproduktionsanlagen, wie z.B. Dampfreformierungsanlagen oder Biomassevergasungsanlagen, angeschlossen sein. Als "Niederdrucknetz" kommt aber grundsätzlich jedes System oder jede Anordnung, in dem oder der ein Gas oder Gasgemisch unter relativ niedrigem Druck transportiert, gespeichert oder verteilt wird, in Frage. Ein Niederdrucknetz kann aus verschiedenen Komponenten bestehen, wie zum Beispiel Gasbehältern, Rohrleitungen, Ventilen, Reglern, Kompressoren und Anschlüssen, die in unterschiedlichen Größen, Formen und Konfigurationen verwendet werden können. Auch kleinere Systeme, wie Gasflaschen mit Sekundärgas mit einer angeschlossenen Leitung, können ein "Niederdrucknetz" darstellen. Dabei kann der genaue Druckbereich, der als "Niederdruck" gilt, je nach Anwendung und Industriestandard variieren.

Ein besonderer Vorteil der Erfindung ist, dass auf der Sweepseite weder eine Vorverdichtung noch eine Nachverdichtung erforderlich ist, vor allem, wenn ein Verbraucher angeschlossen ist, in dem das im feedseitig aus der Membraneinheit strömenden Gasgemisch thermisch verwertet wird (beispielsweise für Industrieprozesse). Allerdings kann das sweepseitig aus der Membraneinheit strömende Gasgemisch in einer Ausführungsform mit einem Kompressor verdichtet werden, beispielsweise um letztlich auch dieses in das Hochdrucknetz einzuspeisen. Im Vergleich zu einer Vorverdichtung bringt diese Ausführung eine erhebliche Energieersparnis mit sich, wie im Zuge der vorliegenden Erfindung herausgefunden wurde.

Die Membraneinheit weist eine Polymermembran, eine Metallmembran, eine Zeolithmembran, eine Keramikmembran oder eine Membran mit gemischter Matrix auf. Polymermembranen bestehen aus verschiedenen Polymeren wie z.B. Polyimide, Polysulfone, Celluloseacetat, Polyethylen und Polycarbonat. Zeolithmembranen wiederum sind in der Regel teurer, weisen aber im Allgemeinen eine höhere Selektivität und thermische Beständigkeit auf. Gemischte Matrix-Membranen kombinieren eine Polymer- oder Keramikmatrix mit anorganischen Füllstoffen wie Zeolithen, Metal-Organic-Frameworks (MOFs) oder Kohlenstoffnanoröhren. Diese Membranen zielen darauf ab, die Vorteile von Polymer- und anorganischen Membranen zu vereinen, und bieten daher sowohl eine hohe Selektivität wie auch eine hohe Permeabilität. Es ist besonders bevorzugt, wenn die Membraneinheit eine Polymermembran, insbesondere eine Polyimidmembran, oder eine Metallmembran aufweist.

Gemäß einer weiteren bevorzugten Ausführungsform ist die Permeabilität der Membraneinheit für das Sekundärgas höher als für das Primärgas. Dies erhöht die Effizienz der Zudosierung.

Je höher die Selektivität der Membran ist, desto höher ist die Energieeffizienz des erfindungsgemäßen Verfahrens. Daher beträgt die Selektivität für das Sekundärgas gegenüber dem Primärgas in einer bevorzugten Ausführungsform zumindest 100, mehr bevorzugt zumindest 150, noch mehr bevorzugt zumindest 200 oder gar zumindest 250, insbesondere zumindest 300 oder gar zumindest 350 beträgt. Die Selektivität ist ein dimensionsloser Wert, da sie das Verhältnis der Permeabilität hinsichtlich des Sekundärgases zur Permeabilität hinsichtlich des Primärgases darstellt.

Auch eine höhere Druckdifferenz zwischen Feed- und Sweepseite ist vorteilhaft. Daher ist in einer bevorzugten Ausführungsform der Druck P_{f} mindestens 1,5x oder gar mindestens 2x so hoch wie der Druck Pₛ, bevorzugt mindestens 3x so hoch oder gar mindestens 4x so hoch, mehr bevorzugt mindestens 5x so hoch, noch mehr bevorzugt mindestens 6x so hoch, insbesondere mindestens 7x so hoch oder gar mindestens 8x so hoch.

Damit einhergehend ist auch eine höhere Druckdifferenz zwischen dem Hochdrucknetz und dem Niederdrucknetz von Vorteil. Gemäß einer weiteren bevorzugten Ausführungsform ist der Druck im Hochdrucknetz mindestens 2x oder gar mindestens 3x so hoch wie der Druck im Niederdrucknetz, bevorzugt mindestens 4x so hoch, mehr bevorzugt mindestens 5x so hoch, noch mehr bevorzugt mindestens 6x so hoch, insbesondere mindestens 7x so hoch oder gar mindestens 8x so hoch.

Zweckmäßigerweise ist die Erfindung so ausgelegt, dass keine Vor- und/oder Nachverdichtungen erforderlich sind, insbesondere auf der Feedseite. Daher entspricht in einer bevorzugten Ausführungsform der Druck P_{f} im Wesentlichen dem Druck im Hochdrucknetz und/oder der Druck Pₛ entspricht im Wesentlichen dem Druck im Niederdrucknetz. Bevorzugt wird unter "im Wesentlichen" verstanden, dass die Abweichung des ersten Drucks vom zweiten Druck höchstens 30% beträgt, bevorzugt höchstens 20%, noch mehr bevorzugt höchstens 10%.

Gemäß einer weiteren bevorzugten Ausführungsform beträgt der Anteil des zudosierten Sekundärgases im feedseitig aus der Membraneinheit strömenden Gasgemisch bis zu 30%, bevorzugt bis zu 20%, insbesondere bis zu 10%. Die Fachperson ist mit Membraneinheiten grundsätzlich vertraut und weiß daher im Lichte der vorliegenden Beschreibung, welche Parameter im Verfahren sie anpassen muss, um diese Zielwerte zu erreichen. Insbesondere, wenn das Sekundärgas Wasserstoff ist, kann ein solches Gasgemisch unter Umständen direkt ins Hochdrucknetz eingespeist werden. Der Mindestanteil des zudosierten Sekundärgases im feedseitig aus der Membraneinheit strömenden Gasgemisch beträgt bevorzugt zumindest 1%, insbesondere zumindest 5%.

Hierin beziehen sich alle Prozentangaben, die sich auf Anteile von Gasen in Gasgemischen beziehen, auf Vol%.

Hierin beziehen sich alle Druckangaben, die in "bar" angegeben sind, auf den Absolutdruck, also "bar absolut".

Die vorliegende Erfindung wird nun unter Bezugnahme auf die Figuren im folgenden Beispiel näher erläutert, auf welches sie jedoch nicht beschränkt ist.

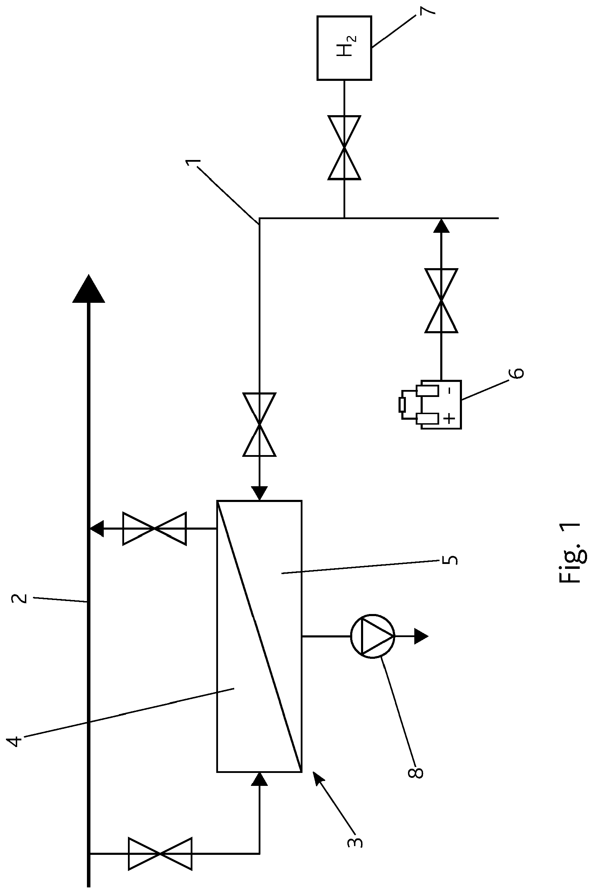

In Figur 1 wird das lokale Niederdruckgasnetz 1 und das weitreichende Hochdruckgasnetz 2 (das bestehende Erdgasnetz) gezeigt. Im Niederdruckgasnetz 1 herrscht ein Druck von 15 bar, im Hochdruckgasnetz 2 herrscht ein Druck von 100 bar. An das lokale Niederdrucknetz 1 sind zumindest eine Vorrichtung 6 zur Herstellung von Wasserstoff, die z.B. als Elektrolysevorrichtung ausgeführt ist, und/oder ein Wasserstoffspeicher 7 angeschlossen.

Im Hochdrucknetz kann aufgrund der örtlichen Bestimmungen bis zu 10% Wasserstoff (Sekundärgas) mit dem Erdgas (wobei dessen Hauptanteil Methan das Primärgas darstellt) mittransportiert werden. Über die Membraneinheit 3 wird Wasserstoff ins Hochdruckgasnetz zudosiert, indem Erdgas auf der Feedseite 4 bei einem Gesamtdruck P_{f} von 100 bar (in diesem Fall entsprechend dem Druck im Erdgasnetz) in die Membraneinheit 3 strömt (als "Feed") und lokal erzeugter bzw. gespeicherter Wasserstoff auf der Sweepseite 5 bei einem Gesamtdruck Pₛ von 15 bar (in diesem Fall entsprechend dem Druck im lokalen Netz) im Gegenstrom in die Membraneinheit 3 strömt (als "Sweep"). Die Membran der Membraneinheit 3 weist eine Selektivität von 200 auf.

Aufgrund der Zudosierung ist der Wasserstoffanteil im feedseitig aus der Membraneinheit 3 strömenden Gasgemisch (sozusagen dem "Retentat") höher als der Wasserstoffanteil im feedseitig in die Membraneinheit 3 strömenden Wasserstoff, d.h. dem "Feed" - in beiden Fällen liegt der Anteil von Wasserstoff jedoch unter 10% (der Partialdruck beträgt also weniger als 10 bar). Der im Sweep vorliegende, reine Wasserstoff (der anfangs einen Partialdruck aufweist, der dem Gesamtdruck Pₛ entspricht; also 15 bar) wird durch die Triebkraft der Membran (aufgrund der Partialdruckdifferenz gegenüber dem Wasserstoff auf der Feedseite 4) sozusagen auf der Feedseite 4 "hochverdichtet". Dies reduziert den Aufwand bzw. den Energiebedarf für die Zudosierung von Wasserstoff ins Gasnetz.

Sweepseitig strömt aus der Membraneinheit 3 ein Gasgemisch, das Wasserstoff (anteilsmäßig weniger als im Sweep) und Methan (anteilsmäßig mehr als im Sweep - im Sweep ist der Anteil 0, wenn reiner Wasserstoff zugeführt wird) beinhaltet, sozusagen das "Permeat". Dieses Gasgemisch wird mit dem Kompressor 8 nachverdichtet. Das führt gegenüber einer sweepseitigen Vorverdichtung (also der Verdichtung des Sweeps) zu einer weiteren Energieersparnis.

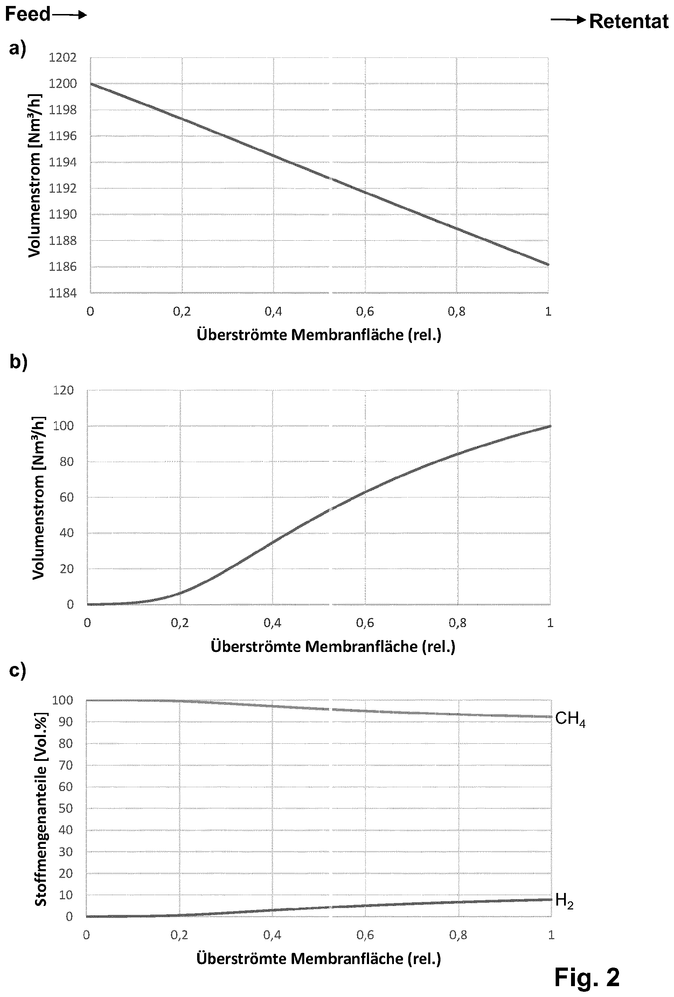

Figur 2 zeigt Berechnungsbeispiele für die Volumenströme im Membranmodul, unter der Annahme, dass im Feed reines Methan und im Sweep reiner Wasserstoff vorliegt. a) Methan-Normvolumenstrom auf der Feedseite; b) Wasserstoff-Normvolumenstrom auf der Feedseite; c) Stoffmengenanteile auf der Feedseite. Wenn die überströmte Membranfläche 0 ist, entspricht der gezeigte Wert der Situation im Feed; wenn die überströmte Membranfläche 1 ist, entspricht der gezeigte Wert der Situation im feedseitig aus der Membraneinheit strömenden Gasgemisch, also im "Retentat".

Die Tabellen 1, 2 und 3 zeigen Berechnungsbeispiele bei unterschiedlichen Membranselektivitäten bzw. Drücken P_{f} (entsprechend dem Druck im Hochdrucknetz) bzw. Pₛ (entsprechend dem Druck im Niederdrucknetz); unter der Annahme, dass im Feed reines Methan und im Sweep reiner Wasserstoff vorliegt. Der "Faktor Energieersparnis" bezieht sich auf die Energieersparnis einer sweepseitigen Nachverdichtung gegenüber einer sweepseitigen Vorverdichtung.

**Tabelle 1**

| **Membranselektivität** | **CH₄-Ausbeute [%]** | **H₂-Ausbeute [%]** | **Faktor Energieersparnis** | **H₂ Produkt [%]** | **CH₄ Produkt [%]** | **P_{f} [bar]** | **Pₛ [bar]** | **Faktor Flow CH₄/H₂** |
|---|---|---|---|---|---|---|---|---|
| 100 | 95,75 | 99,8 | 2,088 | 7,99 | 92,01 | 100 | 10 | 12 |
| 200 | 98,87 | 99,8 | 7,705 | 7,759 | 92,241 | 100 | 10 | 12 |
| 300 | 99,34 | 99,8 | 13,18 | 7,725 | 92,275 | 100 | 10 | 12 |
| 400 | 99,54 | 99,8 | 18,58 | 7,711 | 92,289 | 100 | 10 | 12 |
| 500 | 99,65 | 99,8 | 23,89 | 7,703 | 92,297 | 100 | 10 | 12 |
| 600 | 99,71 | 99,8 | 29,09 | 7,699 | 92,301 | 100 | 10 | 12 |

**Tabelle 2**

| **Membranselektivität** | **CH₄-Ausbeute [%]** | **H₂-Ausbeute [%]** | **Faktor Energieersparnis** | **H₂ Produkt [%]** | **CH₄ Produkt [%]** | **P_{f} [bar]** | **Pₛ [bar]** | **Faktor Flow CH₄/H₂** |
|---|---|---|---|---|---|---|---|---|
| 100 | 98,52 | 99,8 | 7,016 | 9,198 | 90,802 | 100 | 15 | 10 |
| 200 | 99,4 | 99,8 | 17,06 | 9,124 | 90,876 | 100 | 15 | 10 |
| 300 | 99,63 | 99,8 | 26,84 | 9,105 | 90,895 | 100 | 15 | 10 |
| 400 | 99,73 | 99,8 | 36,28 | 9,097 | 90,903 | 100 | 15 | 10 |
| 500 | 99,79 | 99,8 | 45,39 | 9,092 | 90,908 | 100 | 15 | 10 |
| 600 | 99,83 | 99,8 | 54,16 | 9,089 | 90,911 | 100 | 15 | 10 |

**Tabelle 3**

| **Membranselektivität** | **CH₄-Ausbeute [%]** | **H₂-Ausbeute [%]** | **Faktor Energieersparnis** | **H₂ Produkt [%]** | **CH₄ Produkt [%]** | **P_{f} [bar]** | **Pₛ [bar]** | **Faktor Flow CH₄/H₂** |
|---|---|---|---|---|---|---|---|---|
| 100 | 98,34 | 99,8 | 5,24 | 7,79 | 92,21 | 40 | 5 | 12 |
| 200 | 99,37 | 99,8 | 13,48 | 7,72 | 92,28 | 40 | 5 | 12 |
| 300 | 99,61 | 99,8 | 21,65 | 7,706 | 92,294 | 40 | 5 | 12 |
| 400 | 99,72 | 99,8 | 29,6 | 7,7 | 92,3 | 40 | 5 | 12 |
| 500 | 99,78 | 99,8 | 37,34 | 7,7 | 92,3 | 40 | 5 | 12 |
| 600 | 99,82 | 99,8 | 44,83 | 7,7 | 92,3 | 40 | 5 | 12 |

## Patentansprüche

1. Verfahren zur Zudosierung eines Sekundärgases, nämlich Wasserstoff, aus einem Niederdrucknetz (1) in ein Hochdrucknetz (2) mit Primärgas, nämlich Methan, über eine Membraneinheit (3) zur Gaspermeation, wobei das Primärgas, als Teil eines ersten Gasgemisches, auf der Feedseite (4) unter Druck P_{f} in die Membraneinheit strömt und das Sekundärgas, gegebenenfalls als Teil eines zweiten Gasgemisches, auf der Sweepseite (5) unter Druck Pₛ vorzugsweise im Gegenstrom in die Membraneinheit (3) strömt, wobei der Druck P_{f} höher als der Druck Pₛ ist, und wobei der Partialdruck des Sekundärgases auf der Sweepseite (5) höher ist als der Partialdruck des Sekundärgases auf der Feedseite (4), wobei die Selektivität der Membraneinheit (3) für das Sekundärgas gegenüber dem Primärgas zumindest 50 beträgt;
wobei das Hochdrucknetz (2) ein Erdgasnetz ist und das Niederdrucknetz (1) ein lokales Gasnetz, an das zumindest eine Vorrichtung (6) zur Herstellung von Wasserstoff und/oder ein Wasserstoffspeicher (7) angeschlossen ist;
wobei die Membraneinheit (3) eine Polymermembran, eine Metallmembran, eine Zeolithmembran, eine Keramikmembran oder eine Membran mit gemischter Matrix aufweist, wobei die Membran mit gemischter Matrix eine Polymer- oder Keramikmatrix mit anorganischen Füllstoffen wie Zeolithen, Metal-Organic-Frameworks (MOFs) oder Kohlenstoffnanoröhren kombiniert.

2. Verfahren gemäß Anspruch 1, wobei die Permeabilität der Membraneinheit (3) für das Sekundärgas höher ist als für das Primärgas.

3. Verfahren nach Anspruch 1 oder 2, wobei an das lokale Gasnetz zumindest eine Vorrichtung (6) zur Herstellung von Wasserstoff, die mit erneuerbarer Energie betrieben wird, angeschlossen ist.

4. Verfahren nach einem der Ansprüche 1 bis 3, wobei das sweepseitig aus der Membraneinheit strömende Gasgemisch mit einem Kompressor (8) verdichtet wird.

5. Verfahren nach einem der Ansprüche 1 bis 4, wobei die Selektivität der Membraneinheit (3) für das Sekundärgas gegenüber dem Primärgas zumindest 100, mehr bevorzugt zumindest 150, noch mehr bevorzugt zumindest 200 oder gar zumindest 250, insbesondere zumindest 300 oder gar zumindest 350 beträgt.

6. Verfahren nach einem der Ansprüche 1 bis 5, wobei der Druck P_{f} mindestens 1,5x oder gar mindestens 2x so hoch wie der Druck Pₛ ist, bevorzugt mindestens 3x so hoch oder gar mindestens 4x so hoch, mehr bevorzugt mindestens 5x so hoch, noch mehr bevorzugt mindestens 6x so hoch, insbesondere mindestens 7x so hoch oder gar mindestens 8x so hoch ist.

7. Verfahren nach einem der Ansprüche 1 bis 6, wobei der Druck im Hochdrucknetz (2) mindestens 2x oder gar mindestens 3x so hoch wie der Druck im Niederdrucknetz ist, bevorzugt mindestens 4x so hoch, mehr bevorzugt mindestens 5x so hoch, noch mehr bevorzugt mindestens 6x so hoch, insbesondere mindestens 7x so hoch oder gar mindestens 8x so hoch ist.

8. Verfahren nach einem der Ansprüche 1 bis 7, wobei der Druck P_{f} im Wesentlichen dem Druck im Hochdrucknetz (2) entspricht und/oder der Druck Pₛ im Wesentlichen dem Druck im Niederdrucknetz (1) entspricht.

9. Verfahren nach einem der Ansprüche 1 bis 8, wobei der Anteil des zudosierten Sekundärgases im feedseitig aus der Membraneinheit (3) strömenden Gasgemisch bis zu 30% beträgt, bevorzugt bis zu 20% beträgt, insbesondere bis zu 10% beträgt.

10. Verfahren nach einem der Ansprüche 1 bis 9, wobei der Anteil des zudosierten Sekundärgases im feedseitig aus der Membraneinheit (3) strömenden Gasgemisch zumindest 1% beträgt, bevorzugt zumindest 5% beträgt.

11. Verfahren nach einem der Ansprüche 2 bis 10, wobei die Vorrichtung (6) zur Herstellung von Wasserstoff eine Elektrolysevorrichtung ist; vorzugsweise wobei die Elektrolysevorrichtung mit Strom betrieben wird, der von einer Photovoltaikanlage oder einem Windrad erzeugt wird.

## Claims

1. Method for dosing a secondary gas, namely hydrogen, from a low-pressure network (1) into a high-pressure network (2) with primary gas, namely methane, via a membrane unit (3) for gas permeation, wherein the primary gas, as part of a first gas mixture, flows into the membrane unit on the feed side (4) under pressure P_{f}, and the secondary gas, optionally as part of a second gas mixture, flows into the membrane unit (3) on the sweep side (5) under pressure Pₛ, preferably in countercurrent, wherein the pressure P_{f} is higher than the pressure Pₛ, and wherein the partial pressure of the secondary gas on the sweep side (5) is higher than the partial pressure of the secondary gas on the feed side (4), wherein the selectivity of the membrane unit (3) for the secondary gas over the primary gas is at least 50;
wherein the high-pressure network (2) is a natural gas network and the low-pressure network (1) is a local gas network to which at least one device (6) for producing hydrogen and/or a hydrogen storage (7) is connected;
wherein the membrane unit (3) comprises a polymer membrane, a metal membrane, a zeolite membrane, a ceramic membrane or a mixed matrix membrane, wherein the mixed matrix membrane combines a polymer or ceramic matrix with inorganic fillers such as zeolites, metal-organic frameworks (MOFs) or carbon nanotubes.

2. Method according to claim 1, wherein the permeability of the membrane unit (3) for the secondary gas is higher than for the primary gas.

3. Method according to claim 1 or 2, wherein at least one device (6) for producing hydrogen, which is operated with renewable energy, is connected to the local gas network.

4. Method according to any one of claims 1 to 3, wherein the gas mixture flowing out of the membrane unit on the sweep side is compressed with a compressor (8).

5. Method according to any one of claims 1 to 4, wherein the selectivity of the membrane unit (3) for the secondary gas over the primary gas is at least 100, more preferably at least 150, even more preferably at least 200 or even at least 250, in particular at least 300 or even at least 350.

6. Method according to any one of claims 1 to 5, wherein the pressure P_{f} is at least 1.5x or even at least 2x as high as the pressure Pₛ, preferably at least 3x as high or even at least 4x as high, more preferably at least 5x as high, even more preferably at least 6x as high, in particular at least 7x as high or even at least 8x as high.

7. Method according to any one of claims 1 to 6, wherein the pressure in the high-pressure network (2) is at least 2x or even at least 3x as high as the pressure in the low-pressure network, preferably at least 4x as high, more preferably at least 5x as high, even more preferably at least 6x as high, in particular at least 7x as high or even at least 8x as high.

8. Method according to any one of claims 1 to 7, wherein the pressure P_{f} substantially corresponds to the pressure in the high-pressure network (2) and/or the pressure Pₛ substantially corresponds to the pressure in the low-pressure network (1).

9. Method according to any one of claims 1 to 8, wherein the proportion of the dosed secondary gas in the gas mixture flowing out of the membrane unit (3) on the feed side is up to 30%, preferably is up to 20%, in particular is up to 10%.

10. Method according to any one of claims 1 to 9, wherein the proportion of the dosed secondary gas in the gas mixture flowing out of the membrane unit (3) on the feed side is at least 1%, preferably is at least 5%.

11. Method according to any one of claims 2 to 10, wherein the device (6) for producing hydrogen is an electrolysis device; preferably wherein the electrolysis device is operated with electricity which is generated by a photovoltaic system or a wind turbine.

## Revendications

1. Procédé d'ajout dosé d'un gaz secondaire, à savoir de l'hydrogène, à partir d'un réseau à basse pression (1) dans un réseau à haute pression (2) avec un gaz primaire, à savoir du méthane, par l'intermédiaire d'une unité membranaire (3) pour la perméation de gaz, dans lequel le gaz primaire, en tant que partie d'un premier mélange gazeux, s'écoule côté alimentation (4) sous une pression P_{f} dans l'unité membranaire et le gaz secondaire, le cas échéant en tant que partie d'un deuxième mélange gazeux, s'écoule côté balayage (5) sous une pression Pₛ de préférence à contre-courant dans l'unité membranaire (3), dans lequel la pression P_{f} est supérieure à la pression Pₛ, et dans lequel la pression partielle du gaz secondaire sur le côté balayage (5) est supérieure à la pression partielle du gaz secondaire sur le côté alimentation (4), dans lequel la sélectivité de l'unité membranaire (3) pour le gaz secondaire par rapport au gaz primaire est d'au moins 50 ;
dans lequel le réseau à haute pression (2) est un réseau de gaz naturel et le réseau à basse pression (1) est un réseau de gaz local, auquel est raccordé au moins un dispositif (6) de production d'hydrogène et/ou un stockage d'hydrogène (7) ;
dans lequel l'unité membranaire (3) présente une membrane polymère, une membrane métallique, une membrane zéolithique, une membrane céramique ou une membrane à matrice mixte, dans lequel la membrane à matrice mixte combine une matrice polymère ou céramique avec des charges inorganiques telles que des zéolithes, des réseaux métallorganiques (MOFs) ou des nanotubes de carbone.

2. Procédé selon la revendication 1, dans lequel la perméabilité de l'unité membranaire (3) pour le gaz secondaire est supérieure à celle pour le gaz primaire.

3. Procédé selon la revendication 1 ou 2, dans lequel au moins un dispositif (6) de production d'hydrogène, qui est alimenté en énergie renouvelable, est raccordé au réseau de gaz local.

4. Procédé selon l'une des revendications 1 à 3, dans lequel le mélange gazeux s'écoulant hors de l'unité membranaire côté balayage est comprimé avec un compresseur (8).

5. Procédé selon l'une des revendications 1 à 4, dans lequel la sélectivité de l'unité membranaire (3) pour le gaz secondaire par rapport au gaz primaire est d'au moins 100, plus préférentiellement d'au moins 150, encore plus préférentiellement d'au moins 200 ou même d'au moins 250, en particulier d'au moins 300 ou même d'au moins 350.

6. Procédé selon l'une des revendications 1 à 5, dans lequel la pression P_{f} est au moins 1,5 fois ou même au moins 2 fois aussi élevée que la pression Pₛ, de préférence au moins 3 fois aussi élevée ou même au moins 4 fois aussi élevée, plus préférentiellement au moins 5 fois aussi élevée, encore plus préférentiellement au moins 6 fois aussi élevée, en particulier au moins 7 fois aussi élevée ou même au moins 8 fois aussi élevée.

7. Procédé selon l'une des revendications 1 à 6, dans lequel la pression dans le réseau à haute pression (2) est au moins 2 fois ou même au moins 3 fois aussi élevée que la pression dans le réseau à basse pression, de préférence au moins 4 fois aussi élevée, plus préférentiellement au moins 5 fois aussi élevée, encore plus préférentiellement au moins 6 fois aussi élevée, en particulier au moins 7 fois aussi élevée ou même au moins 8 fois aussi élevée.

8. Procédé selon l'une des revendications 1 à 7, dans lequel la pression P_{f} correspond sensiblement à la pression dans le réseau à haute pression (2) et/ou la pression Pₛ correspond sensiblement à la pression dans le réseau à basse pression (1).

9. Procédé selon l'une des revendications 1 à 8, dans lequel la proportion du gaz secondaire ajouté de façon dosée dans le mélange gazeux s'écoulant hors de l'unité membranaire (3) côté alimentation est de jusqu'à 30 %, de préférence est de jusqu'à 20 %, en particulier est de jusqu'à 10 %.

10. Procédé selon l'une des revendications 1 à 9, dans lequel la proportion du gaz secondaire ajouté de façon dosée dans le mélange gazeux s'écoulant hors de l'unité membranaire (3) côté alimentation est d'au moins 1 %, de préférence est d'au moins 5 %

11. Procédé selon l'une des revendications 2 à 10, dans lequel le dispositif (6) de production d'hydrogène est un dispositif d'électrolyse ; de préférence dans lequel le dispositif d'électrolyse est alimenté en électricité qui est produite par une installation photovoltaïque ou une éolienne.
